# EUROPÄISCHE PATENTANMELDUNG

(11) **EP 1 933 258 A1**
(43) Veröffentlichungstag der Anmeldung: **18.06.2008**
(21) Anmeldenummer: 06026050.2
(22) Anmeldetag: 15.12.2006
(51) Int. Cl.: G06K 17/00

(54) **Verfahren und Vorrichtung zur Annahme von zu befördernden Objekten**

(71) Anmelder: Deutsche Post AG, 53113 Bonn (DE)
(72) Erfinder: Ulrich, Keith, 53227 Bonn-Oberkassel (DE); Wilms, Stefan, 50823 Köln (DE); Vieth, Achim, 51067 Köln (DE)
(74) Vertreter: Jostarndt, Hans-Dieter

(57) **Zusammenfassung**

Die Erfindung betrifft ein Verfahren zur Annahme eines zu befördernden Objekts zur Bearbeitung in einem Logistiksystem.

Erfindungsgemäß zeichnet sich das Verfahren dadurch aus, dass grafische Informationen erfasst und mittels optischer Bilderkennung ausgewertet werden, dass durch die Auswertung Sendungsdaten ermittelt werden und das die Sendungsdaten übermittelt und/oder gespeichert werden.

Die Erfindung betrifft ferner einen Informationsträger, eine mit dem Informtaionsträger versehene Postsendung und eine Vorrichtung zur Annahme von zu befördernden Objekten.

## Beschreibung

Die Erfindung betrifft ein Verfahren zur Annahme eines zu befördernden Objekts zur Bearbeitung in einem Logistiksystem. Die Erfindung betrifft ferner einen Informationsträger und eine Vorrichtung zur Annahme von zu befördernden Objekten.

Es ist bekannt, zu befördernde Objekte, insbesondere Postsendungen wie Briefe, Päckchen und Pakete, mit Adressaufklebern zu versehen. Die Adressaufkleber enthalten Sendungsinformationen, welche geeignet sind, Bearbeitungsvorgänge in einem Logistiksystem zu beeinflussen.

Der Erfindung liegt die Aufgabe zugrunde, die Annahme von zu befördernden Objekten möglichst schnell und zuverlässig durchzuführen.

Erfindungsgemäß wird diese Aufgabe durch einen Informationsträger nach Anspruch 9, eine Postsendung nach Anspruch 12 und eine Vorrichtung nach Anspruch 13 gelöst.

Zweckmäßige Weiterbildungen des Verfahrens und der Vorrichtung sind Gegenstand der Unteransprüche.

Erfindungsgemäß ist insbesondere vorgesehen ein Verfahren zur Annahme eines zu befördernden Objekts zur Bearbeitung in einem Logistiksystem so durchzuführen, dass graphische Informationen erfasst und mittels optischer Bilderkennung ausgewertet werden, dass durch die Auswertung Sendungsdaten ermittelt werden und dass die Sendungsdaten übermittelt und/oder gespeichert werden.

Eine Fortbildung des Verfahrens, des Informationsträgers, der Postsendung und der Vorrichtung sieht vor, dass die Speicherung auf einem Speichermedium erfolgt.

Eine Weiterbildung des Verfahrens, des Informationsträgers, der Postsendung und der Vorrichtung zeichnet sich dadurch aus, dass das Speichermedium mit einem Transponder zusammen wirkt.

Eine Fortbildung des Verfahrens, des Informationsträgers, der Postsendung und der Vorrichtung sieht vor, dass das Speichermedium mit dem zu befördernden Objekt verbunden wird.

Eine Fortbildung des Verfahrens, des Informationsträgers, der Postsendung und der Vorrichtung sieht vor, dass die Postsendungen in ein Logistiksystem eingeliefert werden und dass wenigstens ein in dem Logistiksystem erfolgender Bearbeitungsschritt in Abhängigkeit von den Sendungsdaten erfolgt.

Eine Weiterbildung des Verfahrens, des Informationsträgers, der Postsendung und der Vorrichtung zeichnet sich dadurch aus, dass die Speicherung und/oder die Übermittlung der Sendungsdaten durch eine Interaktion mit einem dem Behälter zugeordneten Interaktionsmittel erfolgt.

Eine Fortbildung des Verfahrens, des Informationsträgers, der Postsendung und der Vorrichtung sieht vor, dass die Speicherung und/oder die Übermittlung der Sendungsdaten durch eine Interaktion mit einer Leseeinheit erfolgt.

Eine Weiterbildung des Verfahrens, des Informationsträgers, der Postsendung und der Vorrichtung zeichnet sich dadurch aus, dass das Interaktionsmittel einen Informationsspeicher enthält.

Eine Fortbildung des Verfahrens, des Informationsträgers, der Postsendung und der Vorrichtung sieht vor, dass er mit einem zu versendenden Objekt verbindbar ist, dass er mit Sendungsinformationen beschreibbare Oberfläche aufweist und mit einem Informationsträger zum Speichern von erfassten graphischen Informationen enthält.

Eine Weiterbildung des Verfahrens, des Informationsträgers, der Postsendung und der Vorrichtung zeichnet sich dadurch aus, dass die Sendungsinformationen wenigstens teilweise durch Auswertung der erfassten grafischen Informationen ermittelt sind.

Eine Fortbildung des Verfahrens, des Informationsträgers, der Postsendung und der Vorrichtung sieht vor, dass die Vorrichtung eine Leseeinheit zum Erfassen von auf einer Oberfläche eines Informationsträgers befindlichen grafischen Informationen, ein Rechenmittel zum Auswerten der grafischen Informationen und einen Sender zum Übermitteln von Informationen an ein mit dem Informationsträger verbindbares Speichermedium enthält.

Eine Weiterbildung des Verfahrens, des Informationsträgers, der Postsendung und der Vorrichtung zeichnet sich dadurch aus, dass der Sender elektromagnetische Signale sendet, die von dem Speichermedium empfangen werden können.

Bei den Sendungsdaten handelt es sich insbesondere über einzelne oder mehrere der nachfolgenden Informationen: Absender, Rechnungsempfänger, Empfänger, Ansprechpartner des Absenders, des Empfängers oder des Rechnungsempfängers, Angaben zum Inhalt der Sendung, Informationen über gewünschte Zusatzleistungen (beispielsweise besondere Zustellzeiten) sowie um Sendungsidentifikationsangaben.

Die Erfindung kann mit einer Vielzahl von Vorrichtungen durchgeführt werden und ist daher nicht auf einzelne Vorrichtungen beschränkt.

Der Begriff Logistiksystem ist im Rahmen der Erfindung in einer weiten Bedeutung zu verstehen. Er umfasst insbesondere Systeme, welche die Mittel und Einrichtungen enthalten, um den Transport von Postsendungen von Einlieferungsorten zu Zustellorten auf einem Transportweg, vorzugsweise innerhalb eines Postverteilnetzes, durchzuführen.

Eine Fortbildung des Verfahrens, der Vorrichtung, des Behälters und des Logistiksystems zeichnet sich dadurch aus, dass die Speicherung und/oder die Übermittlung der Sendungsdaten durch die Vorrichtung zur Annahme der zu befördernden Objekte erfolgt.

Dies ermöglicht es beispielsweise, bei einer Einlieferung des Behälters den Einlieferungsvorgang festzustellen und gegebenenfalls zu übermitteln - insbesondere für Tracing-Zwecke - oder zu speichern - beispielsweise für Tracking-Zwecke.

Ferner ist es zweckmäßig, dass die Speicherung und/oder die Übermittlung der Sendungsdaten durch eine Interaktion mit der Vorrichtung erfolgt.

Die Speicherung und/oder die Übermittlung der Sendungsdaten ist insbesondere vorteilhaft, um eine oder mehrere der nachfolgenden Wirkungen zu erzielen:
- Nachweis, dass die Sendungsannahme erfolgte;
- Übermittlung des Zeitpunkts der Einlieferung der Postsendungen aus der Vorrichtung (für ein Tracking der eingelieferten Postsendungen) und/oder eine Speicherung des Zeitpunkts der Einlieferung der Postsendungen aus der Vorrichtung (für ein Tracing der eingebrachten Postsendungen).

Derartige Informationen sind besonders bevorzugte Beispiele erfindungsgemäßer Sendungsdaten.

Zusätzlich zur Information darüber, dass eine Einlieferung stattgefunden hat, können auch weitere Sendungsdaten erfasst und gegebenenfalls übermittelt und/oder gespeichert werden.

Eine Weiterentwicklung des Verfahrens, der Vorrichtung, des Behälters und des Logistiksystems sieht vor, den Informationsspeicher mit dem zu befördernden Objekt zu verbinden.

Eine Fortbildung des Verfahrens, der Vorrichtung, des Behälters und des Logistiksystems zeichnet sich dadurch aus, dass der Informationsspeicher eine Identifikationsangabe enthält.

Eine Weiterentwicklung des Verfahrens, der Vorrichtung, des Behälters und des Logistiksystems sieht vor, dass die Identifikationsangabe das zu befördernde Objekt identifiziert.

Eine Fortbildung des Verfahrens, der Vorrichtung, des Behälters und des Logistiksystems zeichnet sich dadurch aus, dass der Informationsspeicher fest mit dem zu befördernden Objekt verbunden ist.

Eine Weiterentwicklung des Verfahrens, der Vorrichtung, des Behälters und des Logistiksystems sieht vor, dass Informationen wenigstens einer Postsendung erfasst werden, wobei die Informationen einer Sendung zugeordnet sind.

Eine Fortbildung des Verfahrens, der Vorrichtung, des Behälters und des Logistiksystems zeichnet sich dadurch aus, dass es sich bei den erfassten Informationen um einen oder mehrere Codes handelt, welche die Sendung oder die Sendungen identifizieren.

Hierdurch ist es möglich, ein Tracking und/oder Tracing der Postsendungen auf eine einfache und zuverlässige Weise zu verbessern.

Durch die Erfindung werden logistische Funktionen verbessert. Ferner wird durch die Erfindung auf besonders einfache und zweckmäßige Weise ein Logistiksystem bereitgestellt, das ein Tracking und Tracing für eine Vielzahl von Postsendungen ermöglicht.

Die Erfindung stellt die Sendungsdaten unmittelbar an dem Einlieferungsort bereit und beschleunigt so die Verarbeitung der zu befördernden Objekte.

Der Zustellort wird vorzugsweise von dem Auftraggeber des Transports ausgewählt. Bei einer Rücksendung ist dies beispielsweise ein Lager eines Händlers oder Herstellers.

Eine Weiterentwicklung des Verfahrens, der Vorrichtung, des Behälters und des Logistiksystems sieht vor, dass ein Abholer der Postsendungen den Einlieferungsvorgang beendet, indem er eine entsprechende Funktion an einem Eingabemittel auswählt.

Eine Fortbildung des Verfahrens, der Vorrichtung, des Behälters und des Logistiksystems zeichnet sich dadurch aus, dass sich das Eingabemittel ein mobiles Benutzerterminal ist.

Es ist vorteilhaft, die erfindungsgemäß erfassten Einlieferungs-daten für eine Steuerung von logistischen Vorgängen in dem Logistiksystem einzusetzen.

Eine Weiterentwicklung der Erfindung sieht vor, wenigstens einen Bearbeitungsvorgang in dem Logistiksystem in Abhängigkeit von den Sendungsdaten durchzuführen.

So ist es beispielsweise möglich, Kapazitäten in Bearbeitungszentren für die Postsendungen - insbesondere Brief- oder Paketzentren - in Abhängigkeit von den Sendungsdaten zu steuern.

Ferner ist es möglich, die Vorrichtung mit einer geeigneten Auswerteeinheit zu versehen. Diese Auswerteeinheit kann beispielsweise zur Überprüfung einer Berechtigung eines Abholers eingesetzt werden. Hierbei ist es vorteilhaft, eine Identifizierung des Abholers vorzusehen.

Bei den zu befördernden Objekten kann es sich beispielsweise um verschiedene Arten handeln, die jeweils mit bestimmten Verfahrensschritten verbunden sind. In typischen Logistiksystemen, beispielsweise im postalischen Bereich, sind Paketen oder Päckchen Identifizierungsmittel wie Codes zugeordnet, um den Weg einer betreffenden Sendung möglichst effektiv steuern und verfolgen zu können. Herkömmlicherweise muss ein derartiger Code von Erfassungsmitteln eines Behälters erfasst werden, wenn eine Sendung deponiert wird. Beispielsweise wird eine Postnummer in Form eines eingescannten Codes oder einer über eine Tastatur eingegebenen Zeichenfolge erfasst.

Während die Erfassung einer die Sendung identifizierenden Identifikationsnummer, können auch Sendungen auftreten, welche zusätzlich mit einem speziellen Identcode versehen sind, der bei der Annahme ebenfalls eingescannt werden muss. Ferner kann es sich um Nachnahmesendungen mit einzugebenden Nachnahmebeträgen oder jegliche weitere Spezialsendungen mit zusätzlichen Schritten handeln.

Eine Weiterentwicklung des Verfahrens, des Logistiksystems, des Behälters und des Computerprogrammprodukts sieht vor, dass die Leseeinheit oder eine mit ihr verbundene Datenverarbeitungseinheit die Sendungsdaten auswertet.

Eine Fortbildung des Verfahrens, des Logistiksystems, des Behälters und des Computerprogrammprodukts zeichnet sich dadurch aus, dass die Sendungsdaten gespeichert werden.

Eine Weiterentwicklung des Verfahrens, des Logistiksystems, des Behälters und des Computerprogrammprodukts sieht vor, dass die Sendungsdaten in dem Speichermedium gespeichert werden.

Eine Fortbildung des Verfahrens, des Logistiksystems, des Behälters und des Computerprogrammprodukts zeichnet sich dadurch aus, dass die Sendungsdaten in der Leseeinheit und/oder der mit der Leseeinheit verbundenen Datenverarbeitungseinheit gespeichert werden.

Eine besonders bevorzugte Ausführungsform der Erfindung sieht vor, die Sendungsdaten nur in der Leseeinheit und/oder der mit der Leseeinheit verbundenen Datenverarbeitungseinheit zu speichern. Dies hat den Vorteil, dass Speicherplatz in den Behältern gespart wird, so dass diese sich einfacher herstellen lassen.

Eine Weiterentwicklung der Erfindung sieht vor, dass die Datenverarbeitungseinheit eine Auswertung der Sendungsdaten vornimmt.

Eine Fortbildung des Verfahrens, des Logistiksystems, des Behälters, des Transportmittels und des Computerprogrammprodukts zeichnet sich dadurch aus, dass wenigstens ein Handhabungsvorgang des Behälters in Abhängigkeit von der Auswertung erfolgt.

Es ist zweckmäßig, dass die Wahl eines anderen Transportmittels beispielsweise dann erfolgt, wenn eine Gefahr besteht, dass die Postsendungen bei einer Beibehaltung eines ursprünglich vorgesehenen Beförderungsweges eine längere Transportdauer aufweisen als eine vorgebbare Sollbeförderungsdauer.

Eine Fortbildung des Verfahrens, des Logistiksystems, des Behälters, des Transportmittels und des Computerprogrammprodukts zeichnet sich dadurch aus, dass eine Position des Transponders ermittelt wird.

Eine Weiterentwicklung des Verfahrens, des Logistiksystems, des Behälters und des Computerprogrammprodukts sieht vor, dass die Position des Behälters gespeichert wird.

Eine Fortbildung des Verfahrens, des Logistiksystems, des Behälters, des Transportmittels und des Computerprogrammprodukts zeichnet sich dadurch aus, dass die Position in der Datenverarbeitungseinheit gespeichert wird.

Eine Weiterentwicklung des Verfahrens, des Logistiksystems, des Behälters und des Computerprogrammprodukts sieht vor, dass die Position des Behälters bestimmt und dass die Position des Behälters den erhaltenen Sendungsdaten zugeordnet wird.

Eine Fortbildung des Verfahrens, des Logistiksystems, des Behälters, des Transportmittels und des Computerprogrammprodukts zeichnet sich dadurch aus, dass dem Transponder Energie zugeführt wird.

Eine Weiterentwicklung des Verfahrens, des Logistiksystems, des Behälters und des Computerprogrammprodukts sieht vor, dass die Energie durch die Leseeinheit zugeführt wird.

Eine Fortbildung des Verfahrens, des Logistiksystems, des Behälters, des Transportmittels und des Computerprogrammprodukts zeichnet sich dadurch aus, dass eine Zwischenschicht elektromagnetische Strahlung absorbiert.

Eine Weiterentwicklung des Verfahrens, des Logistiksystems, des Behälters und des Computerprogrammprodukts sieht vor, dass die Zwischenschicht elektromagnetische Strahlung reflektiert.

Für einen erfindungsgemäßen Einsatz eignen sich vielfältige Arten von Transpondern. Besonders bevorzugt sind Transponder, die als Sende- und/oder Empfangsgeräte dienen. Insbesondere handelt es sich hierbei um Empfangsgeräte, die nach Empfang eines fremden Signals geeignet sind, ein eigenes Signal abzugeben.

Der englische Begriff "Transponder" ist eine Abkürzung aus Transmitter (Sender) und Responder [(Signal)-beantworter].

Besonders bevorzugt ist ein Einsatz von Transpondern, die mit wenigstens einer Identifikationsangabe versehen sind. Derartige Transponder werden nachfolgend auch als RFID-Tags bezeichnet.

Es ist zweckmäßig, eine visuell erfassbare Kennzeichnung von Gegenständen in Transport- oder Logistiksystemen durch RFID-Technologien mit elektronisch mehrfach beschreibbaren und auslesbaren Transpondern zu ersetzen oder zu ergänzen. Derartige Systeme haben den Vorteil, dass in einem Transponder eine Vielzahl von Informationen elektronisch ein- und ausgelesen werden kann, wodurch automatische Transport-, Sortier-, Nachverfolgungs- oder Verteilvorgänge gesteuert werden können, ohne dass die visuelle Anzeige von Informationen erforderlich ist.

Ein Transponder mit Identifikationsangaben (RFID-Tags) wird vorzugsweise als ein RFID-Tag ausgeführt. Ein RFID-Tag besteht aus einem Mikrochip und einer Antenne. Auf dem Chip ist ein Code gespeichert, der verarbeitungsrelevante Informationen enthält. Insbesondere handelt es sich bei den Informationen über IdentifikationsID-Angaben.

Transponder sind so ausgestattet, dass sie auf ein auslösendes (Radio-) Signal eines Lesegerätes selbst Signale senden und/oder empfangen. Aktive Transponder enthalten eine Energieversorgung für ihren Betrieb. Passive Transponder erhalten hingegen Energie durch die von dem Lesegerät ausgesendeten Signale.

Die technische Realisierung der Erfindung beinhaltet vorzugsweise eine Datenbank, in der Informationen zu den zu transportierenden Postsendungen und über wenigstens eine für eine Sendungsannahme vorgesehene Vorrichtung zur Annahme der Postsendungen enthalten sind.

Es ist besonders vorteilhaft, dass in der Datenbank Informationen über mehrere für die Objektauslieferung vorgesehene Vorrichtungen zur Annahme von Postsendungen enthalten sind.

Eine Übermittlung von ausgewählten, komprimierten und/oder reduzierten Werten hat den Vorteil, dass Speicher- und Übertragungskapazitäten effektiver genutzt werden.

Bei einem Einsatz von Transpondern als Mittel zur Weiterleitung der Messwerte kommt eine Vielzahl von Lesegeräten in Betracht.

Es werden jeweils auf die Wellenlänge der elektromagnetischen Strahlung der Transponder abgestimmte Antennen eingesetzt.

Es ist besonders vorteilhaft, die jeweils einzusetzende Leseeinheit mit der aus dem Stand der Technik bekannten BRM-Funktion auszustatten.

Die BRM-Funktion (Buffered Read Mode = Datenfilterung und - speicherung) stellt sicher, dass die Daten bereits ausgelesener Transponder im Leser zwischengespeichert und nur einmal ausgelesen werden. Dieser Vorteil kommt bei Anwendungen mit Pulkerkennung (Antikollision) zum Tragen, da immer nur "neue" Transponder ausgelesen werden. So steigt die Übertragungsgeschwindigkeit der Daten.

Die auf diese Weise erfassten Informationen werden anschließend weiter verarbeitet.

Zur Übermittlung an die Leseeinheit sind verschiedene Übermittlungsarten einsetzbar.

Die Leseeinheit ist in einem Transportmittel für den Behälter, in einem Lager oder einem Bearbeitungszentrum für den Behälter angeordnet.

Eine Datenverarbeitungseinheit, die vorzugsweise mit der Leseeinheit verbindbar ist, erhält diese Sendungsdaten von der Leseeinheit.

Eine Weiterentwicklung der Erfindung zeichnet sich dadurch aus, dass durch ein Ortungsmittel in Verbindung mit dem Objekt die Position des Objekts bestimmt wird und die Position des Objekts den erhaltenen Sendungsdaten zugeordnet wird. Dabei kann die Position des Objekts durch ein Ortungsmittel direkt an dem Objekt oder an einem Transportmittel bestimmt werden, mit welchem das Objekt transportiert wird. Befindet sich das Ortungsmittel an einem zugehörigen Transportmittel, steht es vorzugsweise in Verbindung mit der Datenverarbeitungseinheit des Objekts.

Die Position des Objekts kann beispielsweise durch ein Ortungsmittel in Form eines GSM-Moduls, eines GPS-Moduls und/oder eines Peilsenders bestimmt werden. Die verschiedenen Ortungsmittel können dabei in Abhängigkeit von einer geforderten Genauigkeit der Positionsbestimmung eingesetzt werden, wobei sie wahlweise senkrecht oder parallel eingesetzt werden können.

Eine Weiterentwicklung des Verfahrens, des Logistiksystems, des Objekts und des Computerprogrammprodukts sieht vor, dass die von den Sensoren erhaltenen Sendungsdaten mit Sollwerten verglichen werden, wobei eine Abweichung von einem Sollwert als Alarm gewertet wird. Der Vergleich der Sendungsdaten erfolgt vorzugsweise durch einen Vergleich der gemessenen elektrischen Eigenschaften der leitfähigen Schichten mit einem Sollwert der elektrischen Eigenschaften. Dabei kann vorgesehen sein, dass eine Abweichung der von dem Sensor erfassten physikalischen Beschaffenheit des Objektmaterials von einem Sollwert nicht als Alarm gewertet wird, falls der Abweichung eine Position des Objekts zugeordnet ist, welche als Position zum erlaubten Öffnen eines Objekts in der Datenverarbeitungseinheit hinterlegt ist.

In einem besonders bevorzugten Ausführungsbeispiel der Erfindung werden die vom Sensor erhaltenen Sendungsdaten einem Kommunikationsmodul an dem Objekt übermittelt, und das Kommunikationsmodul übermittelt die Sendungsdaten einem Nachrichtenempfangsgerät.

Eine Weiterentwicklung der Erfindung sieht vor, wenigstens einen Transponder als Kommunikationsmodul einzusetzen.

Die Übermittlung der Sendungsdaten von dem Kommunikationsmodul an das Nachrichtenempfangsgerät kann auf dem Transportweg oder nach der Ankunft des Objekts am Zielort stattfinden. Vorzugsweise findet die Übermittlung der Sendungsdaten auf dem Transportweg nur statt, falls ein Vergleich innerhalb der Datenverarbeitungseinheit ergibt, dass eine Abweichung von Sollwerten - insbesondere von Sollzeiten für Annahmevorgänge vorliegt.

Als Erfassungsmittel kann beispielsweise eine Antenne vorgesehen sein. Die Postsendungen werden über das Auslesen von an den Postsendungen befindlichen RFID-Tags registriert, wenn die RFID-Tags bei einem Einlieferungsvorgang der Postsendungen an der Antenne vorbeibewegt werden.

Die Leseeinheit kann ferner mit einem Pulkerfassungsgerät versehen sein, welches die Postsendungen erfasst, wenn alle Postsendungen in den Behälter eingebracht sind.

Bei der Sendungserfassung wird wenigstens die Anzahl der in den Behältern eingebrachten Postsendungen in der Datenverarbeitungseinheit registriert. Dabei reduziert ein aus dem Behälter entnommenes Objekt die Anzahl der in der Datenverarbeitungseinheit erfassten Postsendungen, wobei der Vorgang der Einlieferung einer Postsendung aus dem Behälter dadurch registriert wird, dass die Anzahl der Vorgänge durch den zu dem Gegenstand gehörenden, eindeutig identifizierbaren RFID-Tag erfasst wird.

Durch die Verbindung mit einer zentralen Datenverarbeitungseinheit können ferner Informationen über die Objekte in der Datenbank aktualisiert und der Betrieb der Vorrichtung an sich verändernde Anforderungen angepasst werden.

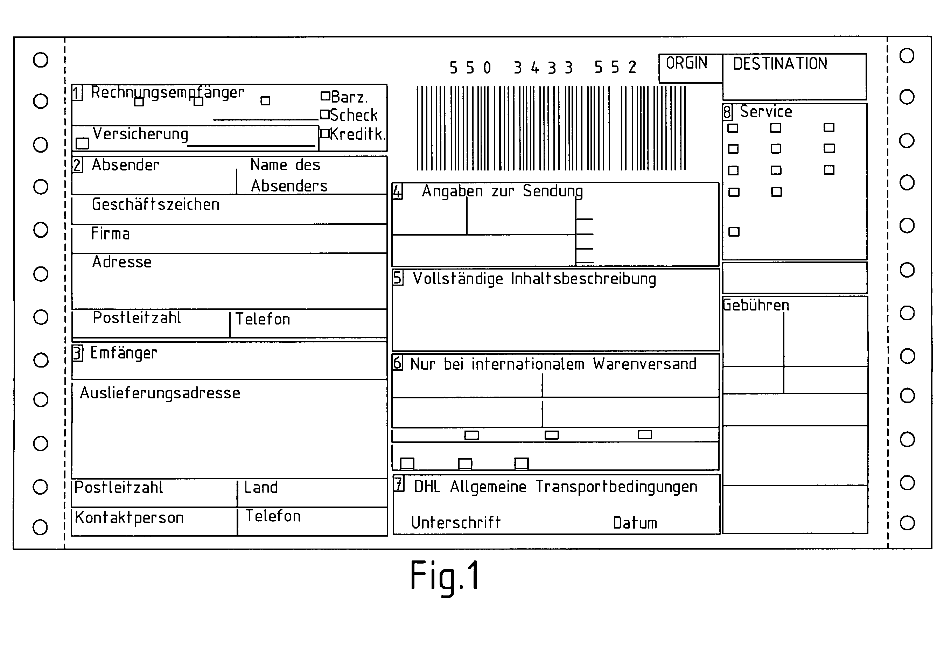

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildung Fig. 1.

Fig. 1 zeigt eine Oberfläche eines erfindungsgemäßen Informationsträgers.

Die Oberfläche des Sendungsträgers enthält Sendungsdaten, beispielsweise Angaben zu einem Rechnungsempfänger, einer Versicherung, einer Zahlungsart, einem Absender, einem Empfänger, zu Kontaktpersonen, zu der Sendung und zu dem Inhalt der Sendung. Ferner ist es möglich Zusatzleistungen in einem Feld auszuwählen. Ferner enthält der Informationsträger eine Sendungsidentifikationsangabe (Beispiel: 550 3433 552) sowohl in Klarschrift, als auch als Barcode.

Diese Oberfläche eines erfindungsgemäßen Informationsträgers entspricht bekannten Sendungsaufklebern und Frachtbriefen, die gleichfalls Grundlage für Sendungsaufkleber für den Versand jeweils eines oder mehrerer zu versendender Objekte sind.

Auf dem Informationsträger vorhandene Angaben können vorgedruckt und/oder manuell dort eingetragen sein. Beispielsweise ist es üblich, Kunden, die mehrere Sendungen abschicken, Informationsträger zur Verfügung zu stellen, welche bereits eine vorgedruckte Absenderadresse sowie gegebenenfalls eine Kundennummer enthalten.

Weitere Angaben - insbesondere zu Sendungsangaben - können beispielsweise handschriftlich oder durch einen geeigneten Drucker - gegebenenfalls in einem gesonderten Bearbeitungsvorgang auf den Informationsträger aufgebracht werden.

Erfindungsgemäß weist der Informationsträger die Besonderheit auf, dass er zusätzlich ein Speichermedium zum Speichern von Sendungsdaten in elektronischer Form aufweist.

Das Speichermedium befindet sich in einer besonders bevorzugten Ausführungsform zwischen Lagen eines mehrlagigen Informationsträgers. In einer besonders bevorzugten Ausführungsform der Erfindung wird das Speichermedium durch einen Transponder bereitgestellt, der einen eigenen Speicherchip zur Aufnahme von Sendungsdaten enthält.

Erfindungsgemäß erfolgt das Versehen des Informationsträgers mit den Sendungsdaten als mehrstufiger Vorgang.
1. Beschriftung des Informationsträgers mit in Klarschrift lesbaren Sendungsinformationen
2. Optisches Erfassen der Sendungsdaten als optische Informationen
3. Erkennung der in den optischen Informationen enthaltenen Sendungsdaten und
4. Übermittlung der zuvor erfassten Sendungsdaten an ein Speichermedium.

Weiterbildungen sehen vor, die dargestellten Verfahrensschritte auszuweiten und gegebenenfalls durch weitere Verfahrensschritte zu ergänzen.

Beispielsweise kann der Verfahrensschritt 1 in zwei Teilschritten durchgeführt werden, wobei ein erster Teilschritt eine Beschriftung des Informationsträgers mit gedruckten Informationen, insbesondere als bereitgestellter Vordruck beinhaltet. Bei den gedruckten Informationen handelt es sich insbesondere um solche Informationen, die bereits im Vorfeld eines Übermittlungsprozesses festgelegt werden können. Hierbei handelt es sich insbesondere um vorgesehene Sendungsidentifikationsangaben sowie um Bezeichnungen von Textfeldern. Die Bezeichnungen für die Textfelder sind in Fig. 1 mit den Bezugsziffern 1 bis 8 gekennzeichnet.

In einem weiteren Verfahrensschritt werden sendungsspezifische Sendungsinformationen eingetragen. Zweckmäßigerweise geschieht dies im Vorfeld eines Einlieferungsvorganges, beispielsweise durch einen Kunden als Benutzer des Logistiksystems.

Bei einer Einlieferung der Postsendungen - insbesondere bei einer Abholung durch einen mit einem mobilen Lesegerät ausgestatteten Abholer - werden die Sendungsdaten erfasst.

Zweckmäßige Weiterbildungen der Erfindung beinhalten sowohl in Klarschrift vorhandene Sendungsinformationen durch eine optische Charaktererkennung mit einem Einlesen maschinenlesbarer Informationen - insbesondere eines Barcodes - zu verbinden.

Eine besonders bevorzugte Ausführungsform der Erfindung sieht vor, den Einlieferungsvorgang der Postsendung so zu gestalten, dass er die dargestellten Erfassungsschritte für die Sendungsdaten enthält.

Besonders vorteilhaft ist, während der Einlieferung (Annahme) des zu versendenden Objekts einen Schreibvorgang auf dem Speichermedium vorzunehmen.

Hierdurch ist es beispielsweise möglich, dass ein zuvor vorbereiteter Frachtbrief Grundlagen für sowohl optische in Klarschrift lesbare Informationen, als auch in einem Speichermedium enthaltene, digital gespeicherte Informationen enthält.

Auf die dargestellte Weise ist sichergestellt, dass das Speichermedium die Sendungsdaten enthält und so eine Handhabung des zu befördernden Objekts in einem Logistiksystem beeinflussen kann.

## Patentansprüche

1. Verfahren zur Annahme eines zu befördernden Objekts zur Bearbeitung in einem Logistiksystem,
**dadurch gekennzeichnet,**
**dass** graphische Informationen erfasst und mittels optischer Bilderkennung ausgewertet werden, dass durch die Auswertung Sendungsdaten ermittelt werden und dass die Sendungsdaten übermittelt und/oder gespeichert werden.

2. Verfahren nach Anspruch 1,
**dadurch gekennzeichnet,**
**dass** die Speicherung auf einem Speichermedium erfolgt.

3. Verfahren nach einem der Ansprüche 2,
**dadurch gekennzeichnet,**
**dass** das Speichermedium mit einem Transponder zusammenwirkt.

4. Verfahren nach Anspruch 2 oder 3,
**dadurch gekennzeichnet,**
**dass** das Speichermedium mit dem zu befördernden Objekt verbunden wird.

5. Verfahren nach einem der vorangegangenen Ansprüche,
**dadurch gekennzeichnet,**
**dass** die Postsendungen in ein Logistiksystem eingeliefert werden und dass wenigstens ein in dem Logistiksystem erfolgender Bearbeitungsschritt in Abhängigkeit von den Sendungsdaten erfolgt.

6. Verfahren nach einem der vorangegangenen Ansprüche,
**dadurch gekennzeichnet,**
**dass** die Speicherung und/oder die Übermittlung der Sendungsdaten durch eine Interaktion mit einem dem Behälter zugeordneten Interaktionsmittel erfolgt.

7. Verfahren nach einem der vorangegangenen Ansprüche,
**dadurch gekennzeichnet,**
**dass** die Speicherung und/oder die Übermittlung der Sendungsdaten durch eine Interaktion mit einer Leseeinheit erfolgt.

8. Verfahren nach Anspruch 7,
**dadurch gekennzeichnet,**
**dass** das Interaktionsmittel einen Informationsspeicher enthält.

9. Informationsträger,
**dadurch gekennzeichnet,**
**dass** er mit einem zu versendenden Objekt verbindbar ist, dass er eine mit Sendungsinformationen beschreibbare Oberfläche aufweist und ein Speichermedium zum Speichern von erfassten graphischen Informationen enthält.

10. Informationsträger nach Anspruch 9,
**dadurch gekennzeichnet,**
**dass** das Speichermedium mit einem Transponder zusammenwirkt.

11. Informationsträger nach Anspruch 9 oder 10,
**dadurch gekennzeichnet,**
**dass** die Sendungsinformationen wenigstens teilweise durch Auswertung der erfassten grafischen Informationen ermittelt sind.

12. Postsendung,
**dadurch gekennzeichnet,**
**dass** sie einen Informationsträger nach einem der Ansprüche 9 bis 11 enthält.

13. Vorrichtung zur Annahme von zu befördernden Objekten,
**dadurch gekennzeichnet,**
**dass** sie eine Leseeinheit zum Erfassen von auf einer Oberfläche eines Informationsträgers befindlichen grafischen Informationen, ein Rechenmittel zum Auswerten der erfassten grafischen Informationen und einen Sender zum Senden von Sendungsinformationen an ein mit dem Informationsträger verbindbares Speichermedium enthält.
